# EUROPEAN PATENT SPECIFICATION

(11) **EP 4 553 956 B1**
(45) Date of publication and mention of the grant of the patent: **25.11.2026**
(21) Application number: 24192149.3
(22) Date of filing: 31.07.2024
(51) Int. Cl.: H01M 10/617, H01M 10/647, H01M 10/613, H01M 50/70, H01M 50/103, H01M 10/6569, H01M 10/6557, H01M 10/654, H01M 10/6552, H01M 10/6556

(54) **BATTERY AND BATTERY PACK**
BATTERIE UND BATTERIEPACK
BATTERIE ET BLOC-BATTERIE

(30) Priority: 09.11.2023 CN 202323040493 U; 09.11.2023 CN 202311494374; 09.11.2023 CN 202323047565 U; 29.01.2024 WO PCT/CN2024/074454
(43) Date of publication of application: 14.05.2025
(73) Proprietor: Eve Power Co., Ltd., Jingmen, Hubei 448000 (CN)
(72) Inventor: GUO, Jiahao, Jingmen, Hubei, 448000 (CN); FANG, Zhenxing, Jingmen, Hubei, 448000 (CN); TAN, Xianyang, Jingmen, Hubei, 448000 (CN); YI, Yanhui, Jingmen, Hubei, 448000 (CN); SUN, Fei, Jingmen, Hubei, 448000 (CN); CHENG, Cheng, Jingmen, Hubei, 448000 (CN); TAN, Mingsheng, Jingmen, Hubei, 448000 (CN); YUAN, Dingding, Jingmen, Hubei, 448000 (CN)
(74) Representative: Murgitroyd & Company

(56) References cited:
- CN-A- 111 076 591
- US-A1- 2018 219 191
- US-A1- 2023 084 044

## Description

### TECHNICAL FIELD

The present disclosure relates to the battery field, in particular to a battery and a battery pack.

### BACKGROUND

As the energy supply method of new energy electric vehicles, power batteries can achieve zero exhaust emissions and reduce environmental pollution compared with traditional fuel vehicles. The battery pack includes a battery case and a cell module. The cell module is composed of a plurality of cells. The cell module converts electric energy into chemical energy when charging, and converts chemical energy into electric energy when discharging. Since the cell module will generate a large amount of heat during the charging and discharging process, and in order to ensure the safety of the battery pack, a cooling plate is generally arranged on the bottom of the battery pack, that is, below the cell module, to reduce the overall temperature of the battery pack.

However, since the cooling plate is only arranged below the battery module, when the heat on the top of the battery cell cannot be dissipated in time, the temperature difference between the position away from the bottom of the battery cell and the bottom of the battery cell is large, which is not conducive to battery circulation and affects the service life of the battery pack.

US2018/219191 discloses a battery comprising a battery housing with an accommodating cavity, an electrode assembly in the cavity and a vapor chamber of the art.

### SUMMARY

The embodiments of the present disclosure provide a battery and a battery pack to solve the above technical problems.

In a first aspect, the embodiments of the present disclosure provide a battery including a housing, an electrode assembly, and a vapor chamber. The housing is provided with an accommodating cavity. The electrode assembly is disposed in the accommodating cavity. The vapor chamber includes a first side plate part and a first bottom plate part connected in sequence. The first side plate part is attached to a side wall of the electrode assembly. The first bottom plate part is disposed between a bottom of the electrode assembly and the housing. A plurality of first through holes are defined by the first side plate part.

In a second aspect, the embodiments of the present disclosure provide a battery pack including the above-mentioned battery.

Beneficial effect: The battery and the battery pack provided by the embodiments of the present disclosure include a battery housing, an electrode assembly and a vapor chamber. The electrode assembly is disposed in the accommodation cavity of the battery housing. The vapor chamber includes a first side plate part and a first bottom plate part connected in sequence. The first side plate part is attached to the side wall of the electrode assembly. The first bottom plate part is disposed between the bottom of the electrode assembly and the housing. The first side plate part is used for transferring heat far away from the bottom of the electrode assembly to the bottom of the electrode assembly. Thereby, the heat can be dissipated through the cooling plate outside the housing, thereby reducing the temperature difference between other positions of the electrode assembly and the top of the electrode assembly, and prolonging the service life of the battery cell.

### BRIEF DESCRIPTION OF THE DRAWINGS

FIG. 1 is a schematic view of an internal structure of a battery provided by some embodiments of the present disclosure.
FIG. 2 is a first schematic view of a vapor chamber provided by some embodiments of the present disclosure.
FIG. 3 is a second schematic view of the vapor chamber provided by some embodiments of the present disclosure.
FIG. 4 is a first explosion schematic view of a battery provided by some embodiments of the present disclosure.
FIG. 5 is a schematic view of a battery module and a cooling plate provided by some embodiments of the present disclosure.
FIG. 6 is a third schematic view of the vapor chamber provided by some embodiments of the present disclosure.
FIG. 7 is a schematic view of a one-way valve being attached to a first cover plate of the vapor chamber provided in some embodiments of the present disclosure.
FIG. 8 is a schematic view of a silk screen being attached to a second vertical plate provided in some embodiments of the present disclosure.
FIG. 9 is a second explosion schematic view of the battery provided by some embodiments of the present disclosure.
FIG. 10 is a schematic view of the battery module provided by some embodiments of the present disclosure.

### Reference numerals:

10a, battery; 20, cooling plate; 100, battery housing; 101, lower housing; 102, cover plate; 103, connecting sheet; 200, electrode assembly; 201, first electrode assembly; 202, second electrode assembly; 300a, vapor chamber; 301, first side plate part; 302, first bottom plate part; 303, first through hole; 304, first top plate part;

300b, vapor chamber; 310, L-shaped housing; 311, first cover plate; 3111, first transverse plate; 3112, first vertical plate; 312, second cover plate; 3121, second transverse plate; 3122, second vertical plate; 313, sealed cavity; 320, one-way valve; 330, wick; 340, support column; 350, support strip; 360, silk screen; 10b, battery; 2021, top surface; 2022, side surface.

### DETAILED DESCRIPTION

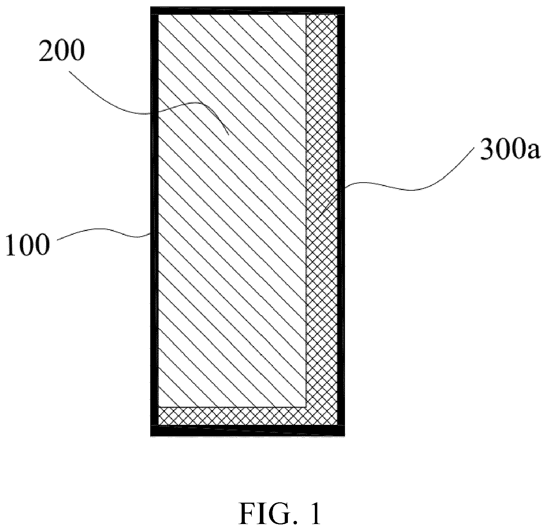

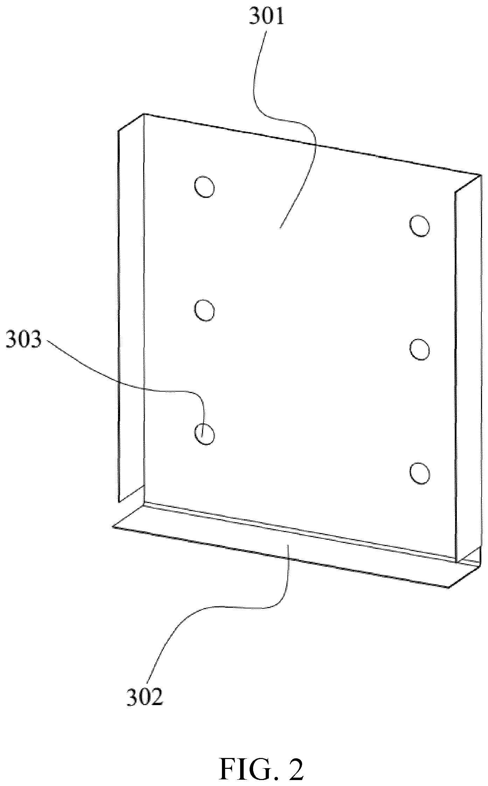

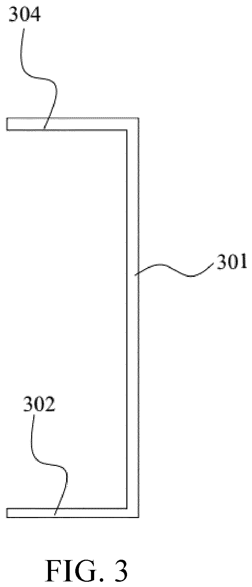

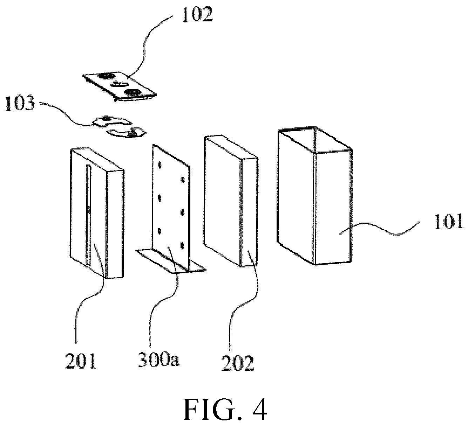

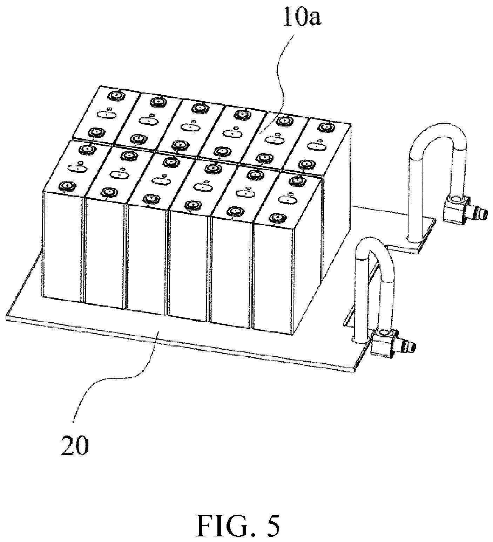

As shown in FIGs. 1 to 5, the present disclosure provides a battery 10a including a battery housing 100, an electrode assembly 200, and a vapor chamber 300a. The battery housing 100 includes an accommodating cavity, and the electrode assembly 200 is disposed in the accommodating cavity. The vapor chamber 300a includes a first side plate part 301 and a first bottom plate part 302 connected in sequence. The first side plate part 301 is attached to a side wall of the electrode assembly 200. The first bottom plate part 302 is provided between a bottom of the electrode assembly 200 and the battery housing 100. The first side plate part 301 is provided with a plurality of first through holes 303.

It can be understood that the first side plate part 301 is used to transfer heat away from the bottom of the electrode assembly 200 to the bottom of the electrode assembly 200, thereby enabling the heat to be dissipated through the cooling plate 20 outside the battery housing 100, thereby reducing the temperature difference between other positions of the electrode assembly 200 and the top of the electrode assembly 200, and prolonging the service life of the battery 10a. In addition, the first side plate part 301a is provided with the plurality of the first through holes 303, so that the electrolyte in the accommodating cavity can normally flow to the side wall of the electrode assembly 200, and the charging and discharging power of the battery 10a can be prevented from decreasing due to the provision of the vapor chamber 300a.

It should be noted that the first side plate part 301 and the first bottom plate part 302 may be integrally formed, such as an integrally formed structure formed by die-casting, injection molding, or the like, or may be a split structure connected by screws, welding, or the like.

An end of the first side plate part 301 is connected to one side of the first bottom plate part 302. Or an end of the first side plate part 301 is connected to a central part of the first bottom plate part 302.

For better heat conduction, the vapor chamber 300a is made of metal or some materials with better heat conduction effect. In order to adapt to the electrolyte environment in the accommodating cavity, the material of the vapor chamber 300a also has high corrosion resistance and chemical stability.

Optionally, in order to allow the electrolyte in the accommodating cavity to flow normally without interfering with the normal operation of the battery 10a, at least a part of the first through holes 303 of the first side plate part 301 are capable of extending to an edge of the first side plate part 301, forming a groove-shaped structure provided in the first side plate part 301 to increase the flow through the first side plate part 301.

In some embodiments, the interior of the vapor chamber 300a is a hollow structure with a heat conduction cavity isolated from the outside, and a liquid medium is stored in the heat conduction cavity for heat conduction.

In some embodiments, the first side plate part 301 extends from the top of the electrode assembly 200 to the bottom of the electrode assembly 200. That is, a length of the first side plate part 301 is equal to a height of the electrode assembly 200, thereby ensuring that heat from the top of the electrode assembly 200 is transferred to the first bottom plate part 302 of the bottom plate of the electrode assembly 200 through the vapor chamber 300a provided on the side wall of the electrode assembly 200, thereby reducing the temperature difference between the top and bottom of the electrode assembly 200.

Of course, in some embodiments, the first side plate part 301 may also extend from the bottom of the electrode assembly 200 to the middle of the electrode assembly 200, that is, the first side plate part 301 covers only a part of the electrode assembly 200, so as to reduce the production cost of the battery 10a.

In some embodiments, the first side plate part 301 completely covers at least one side wall of the electrode assembly 200.

It can be understood that the larger the contact area between the first side plate part 301 and the electrode assembly 200, the better the heat dissipation effect thereof will be. The first side plate part 301 completely covers at least one side wall of the electrode assembly 200, so that the heat of the electrode assembly 200 in the horizontal direction can be uniform, thereby reducing the temperature difference at various parts of the electrode assembly 200 in the horizontal direction.

In some embodiments, the electrode assembly 200 is of a cuboid structure, and the first side plate part 301 is completely attached to at least one side wall surface of the cuboid electrode assembly 200, or the first side plate part 301 completely covers the side wall surface of the cuboid structure.

In some embodiments, the electrode assembly 200 may also be of a cylinder structure, and the first side plate part 301 may completely wrap and cover the entire side wall of the cylinder structure, or may only cover the side wall within a certain radian range.

In some embodiments, the first bottom plate part 302 completely coincides with the bottom of the electrode assembly 200. That is, the shape and size of the first bottom plate part 302 are identical to the shape and size of the bottom of the electrode assembly 200. Alternatively, the size of the first base plate part 302 is much larger than the size of the bottom of the electrode assembly 200, and in condition of the electrode assembly 200 being disposed on the first base plate part 302, the first base plate part 302 may completely cover the bottom of the electrode assembly 200. For example, a plurality of electrode assemblies 200 may be carried on one bottom plate part.

Similarly, in some embodiments, in order to improve the flowability of the electrolyte at the bottom of the electrode assembly 200, the first bottom plate part 302 may be provided with a plurality of second through holes for flowing the electrolyte.

In some embodiments, the first through holes 303 of the first side plate part 301 are arranged in an array.

The above-mentioned array arrangement may be a rectangular array arrangement or a ring array arrangement, and is not limited here. The main purpose is to uniformly distribute a plurality of the first through holes 303 in the first side plate part 301, so as to ensure that the side walls of the electrode assembly 200 attached to the first side plate part 301 can uniformly contact the electrolyte.

In some embodiments, the first through hole 303 may be a circular through hole, a square through hole, or the like.

In some embodiments, the vapor chamber 300a further includes a first top plate part 304 attached to the top of the electrode assembly 200 and connected to the first side plate part 301, and located between the top of the battery housing 100 and the top of the electrode assembly 200.

It can be understood that the connection mode between the first top plate 304 and the first side plate 301 may be referred to the connection mode between the first bottom plate 302 and the first side plate 301. The first top plate 304 and the first bottom plate 302 are connected to both ends of the first side plate 301, respectively. The end of the first side plate 301 is connected to one side of the first top plate 304, or the end of the first side plate part 301 is connected to the middle of the first top plate part 304.

Similarly, the first top plate part 304 and the electrode assembly 200 are arranged in the same manner as the first bottom plate part 302. That is, one first top plate 304 may correspond to one electrode assembly 200, or one first top plate 304 may correspond to a plurality of the electrode assemblies 200. That is, one first top plate part 304 may cover the top of one electrode assembly 200, or one first top plate part 304 may cover the tops of the plurality of the electrode assemblies 200.

When the first top plate part 304 is attached to the top of the electrode assembly 200, the top of the electrode assembly 200 is completely covered.

In some embodiments, the first top plate part 304 is also provided with a plurality of third through holes for flowing the electrolyte.

In some embodiments, the electrode assembly 200 includes a first core 201 and a second core 202 adjacent to each other. The first side plate part 301 is connected to the first bottom plate part 302 to an inverted T-shaped structure. The first side plate part 301 is located between the first electrode assembly 201 and the second electrode assembly 202. Both sides of the first side plate part 301 are attached to the side wall of the first electrode assembly 201 and the side wall of the second electrode assembly 202, respectively. The bottom of the first electrode assembly 201 and the bottom of the second electrode assembly 202 are both provided on the first bottom plate part 302.

That is, in the embodiments, the vapor chamber 300a has an inverted T-shaped structure. Two sides of one first side plate part 301 are attached to two adjacent electrode assemblies 200, respectively. The end of the first side plate part 301 is connected to the middle of the first bottom plate part 302, so that the first bottom plate part 302 is divided into two parts, and the two parts correspond to the bottom of the first electrode assemblies 201 and the bottom of the second electrode assemblies 202 respectively.

In some embodiments, the vapor chamber 300a has a L-shaped structure, that is, the first bottom plate part 302 and the first side plate part 301 are vertically connected and provided on the side and the bottom of the electrode assembly 200, respectively.

In some embodiments, the vapor chamber 300a has an H-shaped structure with clockwise or counterclockwise rotation of 90 degrees. **In** other words, the vapor chamber 300a includes a first top plate part 304, a first bottom plate part 302, and a first side plate part 301. The first top plate part 304 and the first side plate part 301 are vertically connected and parallel to the first bottom plate part 302.

In some embodiments, the battery housing 100 includes a lower housing 101 and a top cover assembly. The top cover assembly covers the lower housing 101. The top cover assembly fits with the lower housing 101 to form the accommodating cavity.

Specifically, the top cover assembly includes a cover plate 102 and a connecting sheet 103, the cover plate 102 covers the lower housing 101 and cooperates with the lower housing 101 to form an accommodating cavity, the electrode assembly 200 and the vapor chamber 300a are both provided in the accommodating cavity. The connecting sheet 103 is disposed in the accommodating cavity for electrically connecting the cover plate 102 and the electrode assembly 200.

In some embodiments, the present disclosure further provides a battery pack including the battery 10a of the above embodiments. Since the battery pack includes the battery 10a in the above embodiments, the battery pack has at least some or all of the beneficial effects of the battery 10a in the above embodiments, and will not be described in detail here.

In some embodiments, the battery pack includes a battery case, a battery module, and a cooling plate 20. The battery module is composed of a plurality of batteries 10a arranged in an array, and the battery module is arranged in the battery case. The cooling plate 20 is disposed between the bottom of the battery module and the bottom of the battery case, and is used for cooling the battery module.

Due to the L-shaped vapor chamber having a bending angle, the transfer rate of the gaseous working medium in the bending area decreases, which affects the thermal conductivity of the vapor chamber.

Based on the above deficiencies, the present disclosure further provides a vapor chamber, which is an L-shaped vapor chamber. By arranging a one-way valve in the bending area of the L-shaped vapor chamber, the guiding effect of the one-way valve can accelerate the gas flow in the bending area, thereby improving the thermal conductivity of the vapor chamber.

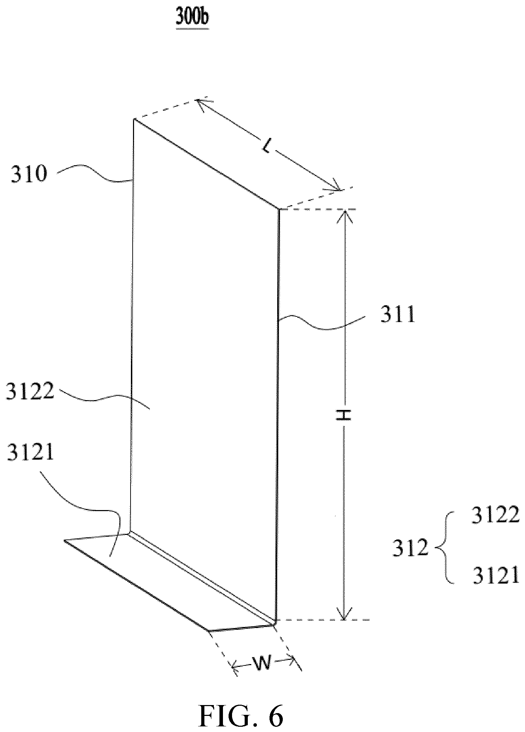

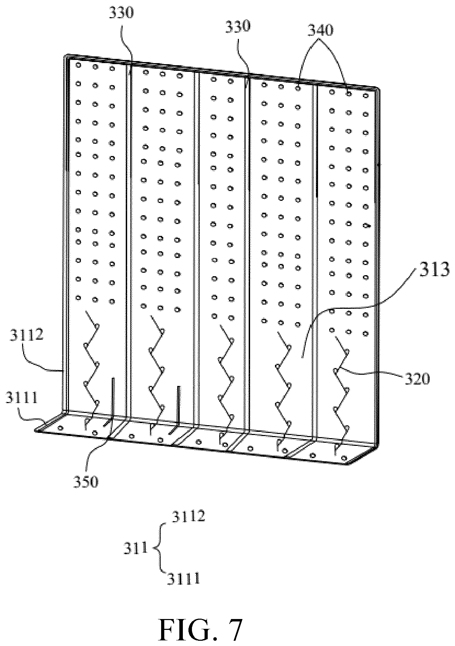

Referring to FIGs. 6 and 7, the vapor chamber 300b provided by the embodiments of the present disclosure includes the L-shaped housing 310 and the one-way valve 320 for transferring the gaseous working medium. The L-shaped housing 310 includes a first cover plate 311 and a second cover plate. The fist cover plate 311 includes a first transverse plate 3111 and a first vertical plate 3112 connected to the first transverse plate 3111 to form an L-shaped shape pattern. The second cover plate 312 includes a second transverse plate 3121 and a second vertical plate 3122 connected to the second transverse plate 3121 to form an L-shaped shape pattern. That is, both the first cover plate 311 and the second cover plate 312 are L-shaped pattern.

It should be noted that the structure of the first transverse plates 3111 and the structure of the second transverse plates 3121 may refer to the structure of the first bottom plate part 302 in the above embodiments, and the structure of the first vertical plates 3112 and the structure of the second vertical plates 3122 may refer to the structure of the first side plate part 301 in the above embodiments.

The L-shaped housing 310 may be made of copper, copper alloy, aluminum, aluminum alloy, stainless steel, other metals, other metal alloys, or the like, that is, the L-shaped housing 310 may be made of one of the above-mentioned materials. The stainless steel may be SUS304, SUS314, or the like. In addition, an outer surface of the L-shaped housing 310 may be subjected to insulation spraying or electroplating treatment, for example, when the stainless steel is used to manufacture the L-shaped housing 310, the stainless steel outer surface may be copper plated, or the like.

An edge of the first transverse plate 3111 is sealed and connected to the second transverse plate 3121 to form a condensation part of the L-shaped housing. An edge of the first vertical plate 3112 is sealed and connected to an edge of the second vertical plate 3122 to form an evaporation part of the L-shaped housing. It should be noted that the edges of the plurality of the transverse plates and the connecting edges of the plurality of the vertical plates do not include edges at the junction of the transverse plates and the vertical plates, for example, the edge of the first transverse plate 3111 is an edge other than an edge connected to the first vertical plate 3112, that is, the edge of the first transverse plate 3111 does not include the edge at the junction of the first transverse plate 3111 and the first vertical plate 3112.

As shown in FIG. 6, the first cover plate 311 may serve as a support plate for the vapor chamber 300b. The second cover plate 312 may serve as a cover plate for covering the support plate. That is, from the perspective of the condensation part of the L-shaped housing 310, the first cover plate 311 is located below the condensation part and the second cover plate 312 is located above condensation part. In other embodiments, the second cover plate 312 may serve as the support plate for the vapor chamber 300b, and the first cover plate 311 may serve as a cover plate for the vapor chamber 300b. That is, the first cover plate 311 is located above the condensation part and the second cover plate 312 is located below the condensation part.

A first cavity is provided between the first transverse plate 3111 and the second transverse plate 3121. A second cavity is provided between the first vertical plate 3112 and the second vertical plate 3122. The first cavity and the second cavity communicate to form an L-shaped sealed cavity 313. The sealed cavity 313 is a vacuum chamber, and a liquid working medium, such as pure water or ethanol, is injected into the sealed cavity 313.

The one-way valve 320 is located in the sealed cavity 313 and is provided on the first cover plate 311. An inlet end of the one-way valve 320 is provided on an inner wall of the first vertical plate 3112. An outlet end of the one-way valve 320 extends along the first vertical plate 3112 and through the connection of the first vertical plate 3112 and the first transverse plate 3111 to an inner wall of the first transverse plate 3111. As shown in FIG. 6, an extending direction of the one-way valve 320 on the first vertical plate 3112 is a direction of a height H of the first vertical plate 3112. an extending direction of the one-way valve 320 on the first transverse plate 3111 is a direction of a width W of the first transverse plate 3111. The connection of the first vertical plate 3112 and the first transverse plate 3111 may be understood as a bending area of the L-shaped housing 310, that is, the one-way valve 320 of the present disclosure is provided in the bending area of the L-shaped housing 310, so that when the evaporation part of the L-shaped housing 310 is heated and the liquid working medium is evaporated into a gaseous working medium (i.e., heat), the gaseous working medium is capable of being transferred to the condensation part of the L-shaped housing 310 at the bending area through the one-way valve 320. The gas flow in the bending area can be accelerated by the directional transmission effect of the one-way valve, thereby increasing the heat conduction rate and improving the thermal conductivity of the vapor chamber 300b. In addition, by providing the one-way valve 320, the transmission of the gaseous working medium against gravity direction can be avoided, thereby reducing the transmission air resistance, and the gas flow rate can be increased by more than 5 times compared with the relevant technology.

The one-way valve 320 in the embodiments of the present disclosure may be a Tesla one-way valve.

Alternatively, a length of the one-way valve 320 extending on the first vertical plate 3112 is three-quarter of a height H of the first vertical plate 3112, and a length of the one-way valve 320 extending on the first transverse plate 3111 is three-quarter of a width W of the first transverse plate 3111. More specifically, the inlet end of the one-way valve 320 approaches an end of the first vertical plate 3112 away from the first horizontal plate 3111. The outlet end of the one-way valve 320 approaches an end of the first horizontal plate 3111 away from the first vertical plate 3112, so that the gaseous working medium can enter the one-way valve 320 more quickly to be transmitted to the condensation part through the one-way valve 320, and the transmission of the gaseous working medium can be further accelerated. Of course, in other embodiments, the length of the one-way valve 320 extending on the first transverse plate 3111 or the first vertical plate 3112 may be one-half or one-quarter of the first transverse plate 3111 or the first vertical plate 3112, or may be provided according to actual needs.

The vapor chamber 300b of the embodiments of the present disclosure further includes N wicks 330, N≥2, located in the sealed cavity 313, and the N wicks 330 extend from the evaporation part to the condensation part. Further, the wick 330 may be provided on the first cover plate 311 or the second cover plate 312, or the wick 330 may be provided on both the first cover plate 311 and the second cover plate 312, without specific limitation.

For example, the N wicks 330 are arranged on the first cover plate 311, one end of the wick 330 is located on the inner wall of the first vertical plate 3112, and the other end of the wick 330 extends along the first vertical plate 3112 and through the connection of the first vertical plate 3112 and the first transverse plate 3111 to the inner wall of the first transverse plate 311. Alternatively, one end of the wick 330 is flush with one end of the first vertical plate 3112 away from the first transverse plate 3111, and the other end of the wick 330 is flush with one end of the first transverse plate 3111 away from the first vertical plate 3112. That is, the wick 330 covers the first cover plate 311 in the longitudinal direction thereof (referring to the wick 330), thereby facilitating the transmission and diffusion of liquid working medium.

The N wicks 330 are arranged sequentially in the direction of the length L of the L-shaped housing 310. As shown in FIG. 6, the length of the L-shaped housing 310 is also the length L of the first vertical plate 3112 and the length L second vertical plate 3122. The i-th wick 330 is arranged at (2*i-1)/2N of the length L of the L-shaped housing 310, for example, when i is equal to 1, the first wick is located at 1/2 N of the length L of the first vertical plate 3112. For example, when N is equal to 2, the two wicks 330 are arranged at 1/4 and 3/4 of the length L of the first vertical plate 3112, respectively. For another example, when N is equal to 5, the positions of the five wicks 330 on the first vertical plate 3112 are 1/10, 3/10, 1/2, 7/10, and 9/10 of the length L of the first vertical plate 3112, respectively. The number of the wicks of the vapor chamber may be greater than or equal to 2. When N is equal to 3, the positions of the three wicks 330 on the first vertical plate 3112 are 1/6, 1/2, and 5/6 of the length L of the first vertical plate 3112, respectively.

Of course, in other embodiments, the arrangement position of the wicks may be uniformly arranged or the like.

The width of each wick 330 ranges from 1.9 mm to 2.3 mm. For example, the width may be 2.0 mm, the thickness is 0.2 mm, and the single wire diameter ranges from 0.05 mm to 0.1 mm. The single wire diameter value is defined as the outer diameter of the wick, for example, may be 0.1 mm, the mesh number is 200 mesh, and is made of T2 copper. Further, the surface of the wick 330 has a copper oxide layer, and the contact angle between the capillary structure of the wick 300 and the surface of the copper oxide layer is 0 degree, so that the hydrophilicity of the wick 330 can be improved. In the process of manufacturing the wick 330, a core (e.g. a copper mesh) is first made of T2 pure copper material, then the surface of the core is oxidized to form a copper oxide layer, and a capillary structure is formed on the surface of the copper oxide, and the contact angle between the capillary structure and the surface of the copper oxide is 0 degree, so that the wick 330 has a super hydrophilic property. If the capillary structure is directly formed on the surface of the pure copper core without oxidizing treatment, the contact angle between the capillary structure and the surface of the pure copper core is large, generally ranging from 80 to 88 degrees, and the hydrophilic property is poor.

In addition, the surface tension of the capillary structure of the wick 330 is 0.08 N/m, so that the anti-gravity climbing ability of the wick 330 can be improved, and the working fluid in the the cold area can quickly climb, thereby accelerating the circulation of the liquid working medium.

Alternatively, in order to further accelerate the movement of the gaseous working medium, a plurality of one-way valves 320 may be provided, and the one-way valves 320 and the wicks 330 may be alternately arranged. For example, the one-way valves 320 may be provided between two adjacent wicks 330.

In the embodiments of the present disclosure, one side of the one-way valve 320 away from the first cover 311 abuts the second cover 312. That is, a part of the one-way valve 320 located on the first vertical plate 3112 abuts the second vertical plate 3122, and a part of the one-way valve 320 located on the first transverse plate 3111 abuts the second transverse plate 3121 to form a support for the sealed cavity 313, thereby greatly improving the deformation resistance of the vapor chamber 300b.

Alternatively, a plurality of support columns 340 and a plurality of support strips 350 for supporting the sealed cavity 313 are provided in the sealed cavity 313. A plurality of the support columns 340 may be distributed in the first cavity or in the second cavity, or support columns 340 may be provided in both the first cavity and the second cavity, and the support columns 340 may be abutted between the first cover plate 311 and the second cover plate 312. More specifically, one end of the support columns 340 may be fixed on the first cover plate 311 and the other end may be abutted with the second cover plate 312, or one end of the support columns 340 may be fixed on the second cover plate 312 and the other end may be abutted with the first cover plate 311.

Each support strip 350 extends from the evaporation part to the condensation part. The support strip 350 may be provided on the first cover plate 311 or on the second cover plate 312, or the support strip 350 may be provided on both the first cover plate 311 and the second cover plate 312. For example, the support strip 350 is disposed on the first cover plate 311, one end of the support strip 350 is disposed on the inner wall of the first vertical plate 3112, and the other end of the support strip 350 extends along the inner wall of the first vertical plate 3112 and through the connection of the first vertical plate 3112 and the first transverse plate 3111 to the inner wall of the first transverse plate 3111. The side of the support strip 350 away from the first cover plate 311 abuts the second cover plate 121. The deformation resistance of the vapor chamber 300b can be further improved by the action of the support columns 340 and the support strips 350.

A plurality of support strips 350 are arranged in the direction of the length L of the L-shaped housing 310. A distance between adjacent two support strips is 2 mm, and the width of the support strips is 0.4 mm. A total volume ratio of all the support strips 350 ranges from 4% to 8%. For example, may be 4%, 6% or 8%. In the total volume ratio range, the support strips 350 can effectively play a supporting role while making the sealed cavity 313 have sufficient space, so that the liquid working medium can be effectively transmitted. In addition, if the volume ratio is too small, the support ability of the support strip may be insufficient. When the sealed cavity 313 of the L-shaped housing 310 is evacuated, the outer surface of the L-shaped housing 310 is deformed due to excessive pressure, which may cause the vapor chamber to contact the electrode assembly and cause damage to the electrode assembly. Therefore, by providing the total volume ratio in the above range in the present disclosure, it can not only provide sufficient support, but also prevent the support strip from occupying too much space of the sealed cavity 313.

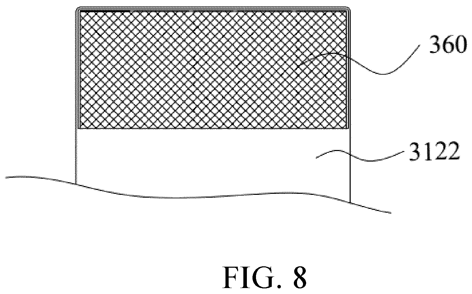

Alternatively, as shown in FIG. 8, the vapor chamber 300b further includes a silk screen 360 located in the sealed cavity 313. In some implementations, the silk screen 360 may be provided on the evaporation part, for example, on the inner wall of the second vertical plate 3122 of the second cover plate 312. The silk screen 360 may be in contact with the wick 330, so that the liquid working medium transported by the wick 330 against gravity can be quickly diffused to the entire surface of the evaporation part. Each node of the silk screen 360 corresponds to a boiling core capable of accelerating the boiling of the liquid working medium in the area, thereby accelerating the transition of the liquid working medium from the liquid state to the gaseous state.

In other implementations, the silk screen 360 may extend from the evaporation part to the condensation part. For example, the silk screen 360 may be provided on the inner wall of the second transverse plate 3121 and inner wall of the second vertical plate 3122 of the second cover plate 312. That is, the silk screen 360 extends from the second vertical plate 3122 to the second transverse plate 3121, the liquid working medium of the condensation part may also be transmitted to the evaporation part through the silk screen 360, and the wick 330, and the silk screen 360 together transmit the liquid working medium. The silk screen 360 may be in contact with the wick 330, which may collect the dispersed liquid working medium, and the collected liquid working medium may be transmitted to the evaporation part along the silk screen 360 and the wick 330, improving the transmission efficiency. Each node of the silk screen 360 located in the evaporation section is equivalent to a boiling core, which can accelerate the boiling of the liquid working medium in this area, thereby accelerating the transformation of the liquid working medium from the liquid state to the gaseous state.

Therefore, by the silk screen 360 of the present disclosure, the liquid working medium can be collected and transmitted, and the boiling of the liquid working medium at the evaporation section can be accelerated.

Of course, in some other embodiments, the screen 360 may be provided on the first cover plate.

A thickness of the silk screen 360 ranges from 0.1 mm to 0.17 mm. The mesh size is 250 mesh.

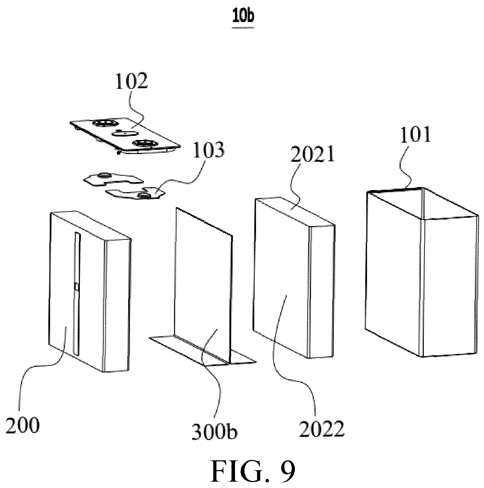

Referring to FIG. 9, the embodiments of the present disclosure further provides a battery 10b including at least one electrode assembly 200 and at least one vapor chamber. The vapor chamber is the vapor chamber 300b described in any of the above embodiments.

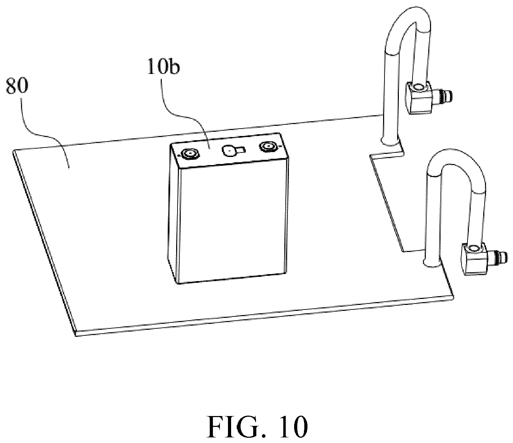

The battery 10b further includes a battery housing 100. The electrode assembly 200 is disposed in the battery housing 100. The vapor chamber 300b is disposed in the battery housing 100. The electrode assembly 200 includes a top surface 2021 for setting poles, a bottom surface opposite the top surface 2021, and a side surface 2022 located between the top surface 2021 and the bottom surface. The condensation part of the L-shaped housing 310 of each vapor chamber 300b is attached to the bottom surface of one of the electrode assemblies 200. In particular, the second transverse plate 3121 of the second cover plate 312 is attached to the bottom surface of the electrode assemblies 200. The evaporation part of each L-shaped housing 310 is attached to a side surface 2022 of one of the electrode assemblies 200. In particular, the second vertical plate 3122 of the second cover 312 is attached to the side surface 2022 of the electrode assembly 200. Further, the evaporation part of the L-shaped housing 310 is attached to the side surface of the largest area of the electrode assembly 200, that is, the second vertical plate 3122 is attached to the side surface of the largest area of the electrode assembly 200. As shown in FIG. 10, the battery 10b further includes a cooling plate 80 which is attached to the bottom of the electrode assembly 200. It can be understood that the bottom of the electrode assemblies 200 is the part where the bottom surface of the electrode assemblies 200 is located. The cooling plate 80 and the electrode assembly 200 may be fixed by a thermally conductive glue.

The L-shaped vapor chamber 300b is provided in the electrode assembly 200, and the heat generated by the pole can be quickly transferred to the bottom of the electrode assembly 200, so that the heat is transmitted to the cooling plate 80 in time and dissipated by the cooling plate 80, thereby improving the heat dissipation effect of the electrode assembly 200.

Alternatively, the number of both the electrode assemblies 200 and the vapor chambers 300b is a plurality. For example, as shown in FIG. 9, the number of both the electrode assemblies 200 and the vapor chambers 300b is two. The battery 10b further includes a connecting sheet 103 and a cover plate 102. The connecting sheet 103 is used for connecting the electrode assembly 200. The pole is provided on the cover plate 102 for covering the battery housing 100. The evaporation parts of the L-shaped housings 310 of every two vapor chambers 300b are attached together, and the condensation parts extend in the opposite direction. Thereby, by attaching parts of the two vapor chambers 300b, heat can be transferred between the vapor chambers 300b, so that when the temperature of one electrode assembly 200 is high, the vapor chamber corresponding to the other electrode assembly 200 is capable of being used to dissipate heat in time, thereby reducing the risk of thermal runaway.

The evaporation part of the vapor chamber 300b of the present disclosure is in contact with the large surface of the electrode assembly 200. The liquid working medium in the sealed cavity 313 thereof is located in the condensation part. The liquid working medium can climb against gravity along the wick 330, and diffuse to the entire evaporation part through the silk screen 360. During the charging and discharging process of the electrode assembly 200, a large amount of heat is generated at the pole of the electrode assembly 200, and the temperature is high, so that the liquid working medium of the evaporation part absorbs a large amount of heat and then gasifies into a gaseous working medium. The gaseous working medium moves along the cavity part in the sealed cavity 313 to the condensation part, and when passing through the bending area, the gaseous working medium can be transferred through the one-way valve 320. After cooled at the condensation part, the gaseous working medium liquefies and releases heat, and the heat is carried away by the cooling plate 20 at the bottom of the electrode assembly 200. The liquefied working medium is re-collected at the condensation part, climbs and diffuses against gravity along the wick 330, absorbs heat and gasifies, and then moves downwards to liquefy when cold, realizing heat transfer in a cyclic manner.

By the action of the one-way valve 320, the transmission rate of the gaseous working medium in the bending area can be accelerated, so that the gaseous working medium can be directed and quickly moved to the bottom of the vapor chamber 300b, that is, the condensation part, thereby improving the heat transfer efficiency of the vapor chamber 300b and ensuring its thermal conductivity in the operating state of a large single cell battery. In addition, the support structure in the shape of a valve body strip is formed by the one-way valve 320, and the deformation resistance of the vapor chamber 300b can be greatly improved.

The vapor chambers 300b and the batteries 10b are described above. The vapor chamber 300b includes a L-shaped housing 310 and a one-way valve 320 for transferring heat. The L-shaped housing 310 includes a first cover plate 311 and a second cover plate 312. The first cover plate 311 includes a first transverse plate 3111 and a first vertical plate 3112 connected to the first transverse plate 3111 to form an L-shaped shape pattern. The second cover plate 312 includes a second transverse plate 3121 and a second vertical plate 3122 connected to the second transverse plate 3121 to form an L-shaped shape pattern. The edges of the first transverse plate 3111 and the second transverse plate 3121 are sealed and connected to form a condensation part of the L-shaped housing 310. The edges of the first vertical plate 3112 and the second vertical plate 3122 are sealed and connected to form an evaporation part of the L-shaped housing. A first cavity is provided between the first transverse plate and the second transverse plate. A second cavity is provided between the first vertical plate and the second vertical plate. The first cavity is communicated with the second cavity to form the L-shaped sealed cavity 313. The one-way valve 320 is located in the sealed cavity 313 and is arranged on the first cover plate. The inlet end of the one-way valve 320 is arranged on the inner wall of the first vertical plate. The outlet end of the one-way valve 320 extends along the first vertical plate and through the connection of the first vertical plate and the first transverse plate to the inner wall of the first transverse plate. The connection position of the first vertical plate and the first transverse plate is also the bending area of the L-shaped housing 310. That is, in the present disclosure, the one-way valve 320 is arranged in the bending area of the L-shaped housing 310 to transmit a gaseous working medium. The directional action of the one-way valve 320 can accelerate the gas flow in the bending area, thereby improving the thermal conductivity of the vapor chamber.

## Claims

1. A battery (10a), wherein the battery (10a) comprises:
a battery housing (100) provided with an accommodating cavity;
an electrode assembly (200) disposed in the accommodating cavity; and
a vapor chamber (300a) comprising a first side plate part (301) and a first bottom plate part (302) connected in sequence, the first side plate part (301) being attached to a side wall of the electrode assembly (200), and the first bottom plate part (302) being disposed between a bottom of the electrode assembly (200) and the battery housing (100);
**characterised in that**
a plurality of first through holes (303) are defined by the first side plate part (301).

2. The battery (10a) of claim 1, wherein
the first side plate part (301) extends from a top of the electrode assembly (200) to a bottom of the electrode assembly (200); and/or,
the first side plate part (301) completely covers at least one side wall of the electrode assembly (200); and/or,
the first bottom plate part (302) completely coincides with the bottom of the electrode assembly (200).

3. The battery (10a) of claim 1, wherein a heat conduction cavity is disposed inside the vapor chamber (300a), and the heat conduction cavity is isolated from an external environment.

4. The battery (10a) of claim 1, wherein
a plurality of second through holes are defined by the first bottom plate part (302); and/ or
the first through holes (303) are arranged in an array in the first side plate part (301); and/or
the battery housing (100) comprises a lower housing (101) and a top cover assembly, the top cover assembly covers the lower housing (101), and the top cover assembly fits with the lower housing (101) to form the accommodating cavity.

5. The battery (10a) of claim 1, wherein the vapor chamber (300a) further comprises a first top plate part (304), the first top plate part (304) is attached to a top of the electrode assembly (200) and is connected to the first side plate part (301), and the first top plate part (304) is located between a top of the battery housing (100) and the top of the electrode assembly (200).

6. The battery (10a) of claim 1, wherein the vapor chamber (300a) comprises an L-shaped housing (310), the L-shaped housing (310) comprises a first cover plate (311) and a second cover plate (312), the first cover plate (311) comprises a first transverse plate (3111) and a first vertical plate (3112) connected to the first transverse plate (3111) to form an L-shaped pattern, the second cover plate (312) comprises a second transverse plate (3121) and a second vertical plate (3122) connected to the second transverse plate (3121) to form an L-shaped pattern, an edge of the first transverse plate (3111) is sealed and connected to an edge of the second transverse plate (3121) to form a condensation part of the L-shaped housing (310), an edge of the first vertical plate (3112) is sealed and connected to an edge of the second vertical plate (3122) to form an evaporation part of the L-shaped housing (310), a first cavity is provided between the first transverse plate (3111) and the second transverse plate (3121), a second cavity is provided between the first vertical plate (3112) and the second vertical plate (3122), and the first cavity is in communication with the second cavity to form a L-shaped sealed cavity; and
the vapor chamber (300a) further comprises a one-way valve (320) configured to transfer a gaseous working medium, the one-way valve (320) is located in the sealed cavity and disposed on the first cover plate (311), an inlet end of the one-way valve (320) is disposed on an inner wall of the first vertical plate (3112), and an outlet end of the one-way valve (320) extends along the first vertical plate (3112) and through a connection position between the first vertical plate (3112) and the first transverse plate (3111) to an inner wall of the first transverse plate (3111).

7. The battery (10a) of claim 6, wherein a length of the one-way valve (320) extending on the first vertical plate (3112) is not less than three-quarter of a height of the first vertical plate (3112), and a length of the one-way valve (320) extending on the first transverse plate (3111) is not less than three-quarter of a width of the first transverse plate (3111).

8. The battery (10a) of claim 6, wherein the vapor chamber (300a) further comprises N wicks (330) located in the sealed cavity, N is greater than or equal to 2, and the N wicks (330) extend from the evaporation part to the condensation part; and
the N wicks (330) are arranged sequentially along a length direction of the L-shaped housing (310), and an arrangement position of a i-th wick (330) is at (2*i-1)/2N of the length of the L-shaped housing (310).

9. The battery (10a) of claim 8, wherein a width of each of the wicks (330) ranges from 1.9 mm to 2.3 mm, and/or a single wire diameter of each of the wicks (330) ranges from 0.05 mm to 0.1 mm.

10. The battery (10a) of claim 6, wherein a side of the one-way valve (320) away from the first cover plate (311) is abutted with the second cover plate (312) to support the sealed cavity.

11. The battery (10a) of claim 6, wherein a plurality of support columns (340) and a plurality of support strips (350) are further provided in the sealed cavity; and each of the support strips (350) extends from the evaporation part to the condensation part; and
the plurality of the support strips (350) are arranged along a length direction of the L-shaped housing (310).

12. The battery (10a) of claim 11, wherein a total volume of the the plurality of the support strips (350) accounts for 4% to 8% of a volume of the sealed cavity.

13. The battery (10a) of claim 6, wherein the vapor chamber (300a) further comprises a silk screen (360) located in the sealed cavity, the silk screen (360) is disposed on the evaporation part or extends from the evaporation part to the condensation part, and a thickness of the silk screen (360) ranges from 0.1 mm to 0.17 mm; and/ or
the L-shaped housing (310) comprise at least one of copper, copper alloy, aluminum, aluminum alloy, and stainless steel, and/or an outer surface of the L-shaped housing (310) is provided with a plating layer.

14. The battery (10a) of claim 6, wherein the battery (10a) comprises a plurality of electrode assemblies (200) and a plurality of vapor chambers (300a), evaporation parts of L-shaped housing (310)s of each two of the vapor chambers (300a) are attached together, condensation parts of the each two of the vapor chambers (300a) extend in opposite directions, and one of evaporation parts of the vapor chambers (300a) is attached to a side of the largest area of corresponding one of the electrode assemblies (200).

15. A battery pack, wherein the battery pack comprises one or more batteries (10a) of any one of claims 1 to 14, the battery pack comprises:
a battery case;
a battery module composed of a plurality of the batteries arranged in an array, the battery module being disposed in the battery case; and
a cooling plate (20) disposed between a bottom of the battery module and a bottom of the battery case.

## Patentansprüche

1. Eine Batterie (10a), wobei die Batterie (10a) Folgendes umfasst:
ein Batteriegehäuse (100), das mit einem Aufnahmeraum versehen ist;
eine in dem Aufnahmeraum angeordnete Elektrodenanordnung (200); und
eine Dampfkammer (300a), die ein erstes Seitenplattenteil (301) und ein erstes Bodenplattenteil (302) umfasst, die nacheinander miteinander verbunden sind, wobei das erste Seitenplattenteil (301) an einer Seitenwand der Elektrodenanordnung (200) befestigt ist, und wobei das erste Bodenplattenteil (302) zwischen einem Boden der Elektrodenanordnung (200) und dem Batteriegehäuse (100) angeordnet ist;
**dadurch gekennzeichnet, dass** durch das erste Seitenplattenteil (301) eine Vielzahl von ersten Durchgangslöchern (303) gebildet wird.

2. Die Batterie (10a) nach Anspruch 1, wobei sich das erste Seitenplattenteil (301) von einer Oberseite der Elektrodenanordnung (200) bis zu einer Unterseite der Elektrodenanordnung (200) erstreckt; und/oder,
das erste Seitenplattenteil (301) mindestens eine Seitenwand der Elektrodenanordnung (200) vollständig abdeckt; und/oder,
das erste Bodenplattenteil (302) sich vollständig mit dem Boden der Elektrodenanordnung (200) deckt.

3. Die Batterie (10a) nach Anspruch 1, wobei innerhalb der Dampfkammer (300a) ein Wärmeleitraum angeordnet ist und der Wärmeleitraum von der äußeren Umgebung isoliert ist.

4. Die Batterie (10a) nach Anspruch 1, wobei durch das erste Bodenplattenteil (302) mehrere zweite Durchgangslöcher gebildet sind; und/oder
die ersten Durchgangslöcher (303) in einer Anordnung im ersten Seitenplattenteil (301) angeordnet sind; und/oder
das Batteriegehäuse (100) ein Untergehäuse (101) und eine obere Abdeckbaugruppe umfasst; die obere Abdeckbaugruppe das Untergehäuse (101) abdeckt und mit dem Untergehäuse (101) verbunden, um den Aufnahmeraum zu bilden ist.

5. Die Batterie (10a) nach Anspruch 1, wobei die Dampfkammer (300a) ferner ein erstes Oberplattenteil (304) umfasst, das erste Oberplattenteil (304) an einer Oberseite der Elektrodenanordnung (200) befestigt und mit dem ersten Seitenplattenteil (301) verbunden ist, und das erste Oberplattenteil (304) sich zwischen einer Oberseite des Batteriegehäuses (100) und der Oberseite der Elektrodenanordnung (200) befindet.

6. Die Batterie (10a) nach Anspruch 1, wobei die Dampfkammer (300a) ein L-förmiges Gehäuse (310) umfasst, wobei das L-förmige Gehäuse (310) eine erste Abdeckplatte (311) und eine zweite Abdeckplatte (312) umfasst, wobei die erste Abdeckplatte (311) eine erste Querplatte (3111) und eine erste vertikale Platte (3112) umfasst, die mit der ersten Querplatte (3111) verbunden ist, um ein L-förmiges Muster zu bilden, die zweite Abdeckplatte (312) eine zweite Querplatte (3121) und eine zweite vertikale Platte (3122) umfasst, die mit der zweiten Querplatte (3121) verbunden ist, um ein L-förmiges Muster zu bilden, wobei eine Kante der ersten Querplatte (3111) versiegelt und mit einer Kante der zweiten Querplatte (3121) verbunden ist, um einen Kondensationsabschnitt des L-förmigen Gehäuses (310) zu bilden; eine Kante der ersten vertikalen Platte (3112) versiegelt und mit einer Kante der zweiten vertikalen Platte (3122) verbunden ist, um einen Verdampfungsabschnitt des L-förmigen Gehäuses (310) zu bilden; zwischen der ersten Querplatte (3111) und der zweiten Querplatte (3121) ein erster Hohlraum vorgesehen ist, zwischen der ersten vertikalen Platte (3112) und der zweiten vertikalen Platte (3122) ein zweiter Hohlraum vorgesehen ist, und der erste Hohlraum mit dem zweiten Hohlraum in Verbindung steht, um einen L-förmigen, abgedichteten Hohlraum zu bilden; und
die Dampfkammer (300a) ferner ein Einwegventil (320) umfasst, das zur Weiterleitung eines gasförmigen Arbeitsmediums ausgelegt ist; das Einwegventil (320) sich in dem abgedichteten Hohlraum befindet und an der ersten Abdeckplatte (311) angeordnet ist; ein Einlassende des Einwegventils (320) an einer Innenwand der ersten vertikalen Platte (3112) angeordnet ist, und ein Auslassende des Einwegventils (320) sich entlang der ersten vertikalen Platte (3112) und durch eine Verbindungsstelle zwischen der ersten vertikalen Platte (3112) und der ersten Querplatte (3111) zu einer Innenwand der ersten Querplatte (3111) erstreckt.

7. Die Batterie (10a) nach Anspruch 6, wobei eine Länge des Einwegventils (320), das sich auf der ersten vertikalen Platte (3112) erstreckt, nicht weniger als drei Viertel der Höhe der ersten vertikalen Platte (3112) beträgt, und eine Länge des Einwegventils (320), die sich auf der ersten Querplatte (3111) erstreckt, nicht weniger als drei Viertel der Breite der ersten Querplatte (3111) beträgt.

8. Die Batterie (10a) nach Anspruch 6, wobei die Dampfkammer (300a) ferner N Dochte (330) umfasst, die sich in dem abgedichteten Hohlraum befinden, wobei N größer oder gleich 2 ist und sich die N Dochte (330) vom Verdampfungsabschnitt zum Kondensationsabschnitt erstrecken; und
die N Dochte (330) nacheinander entlang einer Längsrichtung des L-förmigen Gehäuses (310) angeordnet sind, und die Anordnungsposition eines i-ten Dochtes (330) bei (2*i-1)/2N der Länge des L-förmigen Gehäuses (310) liegt.

9. Die Batterie (10a) nach Anspruch 8, wobei die Breite jedes der Dochte (330) zwischen 1,9 mm und 2,3 mm liegt und/oder der Durchmesser eines einzelnen Drahtes jedes der Dochte (330) zwischen 0,05 mm und 0,1 mm liegt.

10. Die Batterie (10a) nach Anspruch 6, wobei eine von der ersten Abdeckplatte (311) abgewandte Seite des Einwegventils (320) an die zweite Abdeckplatte (312) angrenzt, um den abgedichteten Hohlraum zu stützen.

11. Die Batterie (10a) nach Anspruch 6, wobei in dem abgedichteten Hohlraum ferner eine Vielzahl von Stützsäulen (340) und eine Vielzahl von Stützstreifen (350) vorgesehen sind; und sich jeder der Stützstreifen (350) vom Verdampfungsabschnitt zum Kondensationsabschnitt erstreckt; und
die zahlreichen Stützstreifen (350) entlang einer Längsrichtung des L-förmigen Gehäuses (310) angeordnet sind.

12. Die Batterie (10a) nach Anspruch 11, wobei das Gesamtvolumen der mehreren Stützstreifen (350) 4 % bis 8 % des Volumens des abgedichteten Hohlraums ausmacht.

13. Die Batterie (10a) nach Anspruch 6, wobei die Dampfkammer (300a) ferner einen Siebdruck (360) umfasst, der sich in dem abgedichteten Hohlraum befindet, wobei der Siebdruck (360) auf dem Verdampfungsteil angeordnet ist oder sich vom Verdampfungsteil zum Kondensationsteil erstreckt, und wobei die Dicke des Siebdrucks (360) im Bereich von 0,1 mm bis 0,17 mm liegt; und/oder
das L-förmige Gehäuse (310) aus mindestens einem der folgenden Materialien besteht: Kupfer, einer Kupferlegierung, Aluminium, einer Aluminiumlegierung und Edelstahl, und/oder eine Außenfläche des L-förmigen Gehäuses (310) mit einer Beschichtung versehen ist.

14. Die Batterie (10a) nach Anspruch 6, wobei die Batterie (10a) mehrere Elektrodenanordnungen (200) und mehrere Dampfkammern (300a) umfasst, die Verdampfungsabschnitte von L-förmigen Gehäusen (310) jeweils zweier der Dampfkammern (300a) miteinander verbunden sind, sich die Kondensationsabschnitte der jeweils beiden Dampfkammern (300a) in entgegengesetzte Richtungen erstrecken und einer der Verdampfungsabschnitte der Dampfkammern (300a) an einer Seite der größten Fläche der entsprechenden Elektrodenanordnung (200) angebracht ist.

15. Ein Akkupack, wobei das Akkupack eine oder mehrere Batterien (10a) gemäß einem der Ansprüche 1 bis 14 umfasst, und wobei das Akkupack Folgendes umfasst:
ein Batteriegehäuse;
ein Batteriemodul, das aus einer Vielzahl von in einer Anordnung angeordneten Batterien besteht, wobei das Batteriemodul im Batteriegehäuse untergebracht ist; und
eine Kühlplatte (20), die zwischen dem Boden des Batteriemoduls und dem Boden des Batteriegehäuses angeordnet ist.

## Revendications

1. Une batterie (10a), **caractérisée en ce que** la batterie (10a) comprend :
un boîtier de batterie (100) muni d'une cavité de logement ;
un ensemble d'électrodes (200) disposé dans la cavité de logement ; et
une chambre à vapeur (300a) comprenant une première partie de plaque latérale (301) et une première partie de plaque inférieure (302) reliées en série, la première partie de plaque latérale (301) étant fixée à une paroi latérale de l'ensemble d'électrodes (200), et la première partie de plaque inférieure (302) étant disposée entre le fond de l'ensemble d'électrodes (200) et le boîtier de batterie (100) ;
**caractérisé en ce qu'**une pluralité de premiers trous traversants (303) sont définis par la première partie de plaque latérale (301).

2. La batterie (10a) selon la revendication 1, dans laquelle la première partie de plaque latérale (301) s'étend depuis le haut de l'ensemble d'électrodes (200) jusqu'au bas de l'ensemble d'électrodes (200) ; et/ou,
la première partie de plaque latérale (301) recouvre entièrement au moins une paroi latérale de l'ensemble d'électrodes (200) ; et/ou,
la première partie de la plaque inférieure (302) coïncide parfaitement avec la face inférieure de l'ensemble d'électrodes (200).

3. La batterie (10a) selon la revendication 1, dans laquelle une cavité de conduction thermique est disposée à l'intérieur de la chambre à vapeur (300a), et ladite cavité de conduction thermique est isolée de l'environnement extérieur.

4. La batterie (10a) selon la revendication 1, dans laquelle une pluralité de deuxièmes trous traversants sont définis par la première partie de plaque inférieure (302) ; et/ou
les premiers trous traversants (303) sont disposés en réseau dans la première partie de plaque latérale (301) ; et/ou
le boîtier de batterie (100) comprend un boîtier inférieur (101) et un ensemble de couvercle supérieur ; cet ensemble de couvercle supérieur recouvre le boîtier inférieur (101) et s'emboîte avec celui-ci pour former la cavité de logement.

5. La batterie (10a) selon la revendication 1, dans laquelle la chambre à vapeur (300a) comprend en outre une première partie de plaque supérieure (304), la première partie de plaque supérieure (304) est fixée à la partie supérieure de l'ensemble d'électrodes (200) et est reliée à la première partie de plaque latérale (301), et la première partie de plaque supérieure (304) est située entre la partie supérieure du boîtier de batterie (100) et la partie supérieure de l'ensemble d'électrodes (200).

6. La batterie (10a) selon la revendication 1, dans laquelle la chambre à vapeur (300a) comprend un boîtier en forme de L (310), le boîtier en forme de L (310) comprenant une première plaque de recouvrement (311) et une deuxième plaque de recouvrement (312), la première plaque de recouvrement (311) comprenant une première plaque transversale (3111) et une première plaque verticale (3112) reliée à la première plaque transversale (3111) pour former une configuration en L, la deuxième plaque de recouvrement (312) comprend une deuxième plaque transversale (3121) et une deuxième plaque verticale (3122) reliée à la deuxième plaque transversale (3121) pour former une configuration en L, un bord de la première plaque transversale (3111) est scellé et relié à un bord de la deuxième plaque transversale (3121) pour former une partie de condensation du boîtier en forme de L (310), un bord de la première plaque verticale (3112) est scellé et relié à un bord de la deuxième plaque verticale (3122) pour former une partie d'évaporation du boîtier en forme de L (310), une première cavité est prévue entre la première plaque transversale (3111) et la deuxième plaque transversale (3121), une deuxième cavité est prévue entre la première plaque verticale (3112) et la deuxième plaque verticale (3122), et la première cavité communique avec la deuxième cavité pour former une cavité étanche en forme de L ;
et la chambre à vapeur (300a) comprend en outre un clapet anti-retour (320) configuré pour transférer un fluide de travail gazeux ; le clapet anti-retour (320) est situé dans la cavité étanche et disposé sur la première plaque de recouvrement (311) ; une extrémité d'entrée du clapet anti-retour (320) est disposée sur une paroi interne de la première plaque verticale (3112), et une extrémité de sortie du clapet anti-retour (320) s'étend le long de la première plaque verticale (3112) et traverse un point de raccordement entre la première plaque verticale (3112) et la première plaque transversale (3111) pour aboutir à une paroi interne de la première plaque transversale (3111).

7. La batterie (10a) selon la revendication 6, dans laquelle la longueur du clapet anti-retour (320) s'étendant sur la première plaque verticale (3112) n'est pas inférieure aux trois quarts de la hauteur de la première plaque verticale (3112), et la longueur du clapet anti-retour (320) s'étendant sur la première plaque transversale (3111) n'est pas inférieure aux trois quarts de la largeur de la première plaque transversale (3111).

8. La batterie (10a) selon la revendication 6, dans laquelle la chambre à vapeur (300a) comprend en outre N mèches (330) situées dans la cavité étanche, N étant supérieur ou égal à 2, et les N mèches (330) s'étendant de la partie d'évaporation à la partie de condensation et
les N mèches (330) sont disposées les unes à la suite des autres dans le sens de la longueur du boîtier en forme de L (310), et la position de la i-ème mèche (330) se situe à (2*i-1)/2N de la longueur du boîtier en forme de L (310).

9. La batterie (10a) selon la revendication 8, dans laquelle la largeur de chacune des mèches (330) est comprise entre 1,9 mm et 2,3 mm, et/ou le diamètre d'un seul fil de chacune des mèches (330) est compris entre 0,05 mm et 0,1 mm.

10. La batterie (10a) selon la revendication 6, dans laquelle un côté du clapet anti-retour (320) opposé à la première plaque de recouvrement (311) est en butée contre la deuxième plaque de recouvrement (312) afin de soutenir la cavité étanche.

11. La batterie (10a) selon la revendication 6, dans laquelle une pluralité de colonnes de support (340) et une pluralité de bandes de support (350) sont en outre prévues dans la cavité étanche ; et chacune des bandes de support (350) s'étend de la partie d'évaporation à la partie de condensation ; et
la plupart des bandes de support (350) sont disposées dans le sens de la longueur du boîtier en forme de L (310).

12. La batterie (10a) selon la revendication 11, dans laquelle le volume total de la pluralité de bandes de support (350) représente entre 4 % et 8 % du volume de la cavité étanche.

13. La batterie (10a) selon la revendication 6, dans laquelle la chambre à vapeur (300a) comprend en outre un écran sérigraphié (360) situé dans la cavité étanche, l'écran sérigraphié (360) étant disposé sur la partie d'évaporation ou s'étendant de la partie d'évaporation à la partie de condensation, et l'épaisseur de l'écran sérigraphié (360) étant comprise entre 0,1 mm et 0,17 mm ; et/ou
le boîtier en forme de L (310) est constitué d'au moins l'un des matériaux suivants : cuivre, alliage de cuivre, aluminium, alliage d'aluminium et acier inoxydable, et/ou la surface extérieure du boîtier en forme de L (310) est recouverte d'une couche de placage.

14. La batterie (10a) selon la revendication 6, dans laquelle la batterie (10a) comprend une pluralité d'ensembles d'électrodes (200) et une pluralité de chambres à vapeur (300a), les parties d'évaporation des boîtiers en forme de L (310) de deux chambres à vapeur (300a) quelconques sont fixées l'une à l'autre, les parties de condensation de ces deux chambres à vapeur (300a) quelconques s'étendent dans des directions opposées, et l'une des parties d'évaporation des chambres à vapeur (300a) est fixée à un côté de la plus grande surface de l'un des ensembles d'électrodes (200) correspondants.

15. Bloc-batterie, **caractérisé en ce qu'**il comprend une ou plusieurs batteries (10a) répondant à l'une quelconque des revendications 1 à 14, ledit bloc-batterie comprenant :
un boîtier de batterie ;
un module de batteries composé d'une pluralité de batteries disposées en réseau, ce module étant logé dans le boîtier de batterie ; et
une plaque de refroidissement (20) disposée entre la face inférieure du module de batteries et la face inférieure du boîtier de batterie.
